# EUROPEAN PATENT APPLICATION

(11) **EP 4 488 311 A1**
(43) Date of publication of application: **08.01.2025**
(21) Application number: 23780728.4
(22) Date of filing: 29.03.2023
(51) Int. Cl.: C08G 18/72, B01D 63/00, B01D 63/02, C08G 18/10, C08G 18/34, C08G 18/38, C08G 18/76, C08G 18/79, C09K 3/10

(54) **POLYISOCYANATE COMPOSITION, POLYURETHANE RESIN FORMING COMPOSITION, MEMBRANE SEALING MATERIAL AND MEMBRANE MODULE**

(30) Priority: 29.03.2022 JP 2022053146
(71) Applicant: Tosoh Corporation, Yamaguchi 746-8501 (JP)
(72) Inventor: KAMIYA, Ayami, Yokkaichi-shi, Mie 510-8540 (JP)
(74) Representative: TBK
(86) International application number: PCT/JP2023/012884
(87) International publication number: WO 2023/190720

(57) **Abstract**

A polyisocyanate composition containing:
a diphenylmethane diisocyanate (a1); an isocyanate-terminated prepolymer (a2) that is a reaction product of a polyisocyanate (a2-1) and a polyol (a2-2); and a modified isocyanate (a3), in which
the polyisocyanate (a2-1) contains a diphenylmethane diisocyanate (a2-1-1) and a modified isocyanate (a2-1-2), in which
the modified isocyanate (a2-1-2) is at least one selected from the group consisting of a carbodiimide-modified diphenylmethane diisocyanate and a uretonimine-modified diphenylmethane diisocyanate, and
the modified isocyanate (a3) is a modified product of a diphenylmethane diisocyanate, and
the content of the modified isocyanate (a2-1-2) in the polyisocyanate (a2-1) is 4.5% to 15% by mass.

## Description

### Technical Field

The present disclosure relates to a polyisocyanate composition, a polyurethane resin forming composition, a membrane sealing material, and a membrane module.

### Background Art

Membrane sealing materials obtained using a diphenylmethane diisocyanate (hereinafter also referred to as MDI)-based polyisocyanate and a polyol are widely used to fix and seal membranes such as hollow fiber membranes.

For example, Patent Literature 1 discloses a polyurethane resin forming composition, which contains a polyisocyanate component (A) composed of a prepolymer synthesized from partially dehydrated castor oil and/or partially acylated castor oil and an organic polyisocyanate; and a polyol component (B).

### Citation List

### Patent Literature

Patent Literature 1: Japanese Unexamined Patent Publication No. H8-120043

### Summary of Invention

### Technical Problem

When MDI-based polyisocyanate is used as a sealing material for a membrane containing glycerin, the isocyanate monomer contained in the MDI-based polyisocyanate reacts with glycerin, and among the reaction products, low molecular weight reaction products are eluted into the liquid that is in contact with the membrane. In order to decrease the amount of low molecular weight reaction products eluted, it is necessary to decrease the amount of the MDI monomer in the polyisocyanate. However, when the eluted amount is decreased to a practical level, the amount of the polyol introduced increases, and the viscosity of the polyisocyanate becomes too high. For this reason, it has been difficult to achieve both a low viscosity and suppression of the amount of low molecular weight reaction products eluted.

In addition, the polyurethane resin forming composition of Patent Literature 1 has a problem in that the crosslink density of the polyurethane resin decreases and shaping defects are generated since partially dehydrated castor oil and the like that contain a small amount of crosslinking components are used. The composition also has a problem in that the high hydrophobicity of partially dehydrated castor oil may cause phase separation inside the polyurethane resin and poor appearance of the shaped product may occur.

Accordingly, an aspect of the present disclosure is directed to providing a polyisocyanate composition and a polyurethane resin forming composition, which generate a small amount of eluates, contribute to the production of a membrane sealing material having a high hardness and excellent appearance, and have a low viscosity. An aspect of the present disclosure is also directed to providing a membrane sealing material and a membrane module, which are obtained using the polyurethane resin forming composition.

### Solution to Problem

According to each aspect of the present disclosure, the following embodiments [1] to [13] are provided.
[1]: A polyisocyanate composition containing a polyisocyanate (A), in which
   the polyisocyanate (A) contains:
   a diphenylmethane diisocyanate (a1);
   an isocyanate-terminated prepolymer (a2); and
   a modified isocyanate (a3), in which
   the isocyanate-terminated prepolymer (a2) is a reaction product of a polyisocyanate (a2-1) and a polyol (a2-2), in which
   the polyisocyanate (a2-1) contains a diphenylmethane diisocyanate (a2-1-1) and a modified isocyanate (a2-1-2), in which
   the modified isocyanate (a2-1-2) and the modified isocyanate (a3) are at least one selected from the group consisting of a carbodiimide-modified diphenylmethane diisocyanate and a uretonimine-modified diphenylmethane diisocyanate, in which
   the modified isocyanate (a3) is a modified product of a diphenylmethane diisocyanate, and
   a content of the modified isocyanate (a2-1-2) in the polyisocyanate (a2-1) is 4.5% to 15% by mass.
[2] : The polyisocyanate composition according to [1], in which the modified isocyanate (a3) contains at least one selected from the group consisting of a carbodiimide-modified diphenylmethane diisocyanate and a uretonimine-modified diphenylmethane diisocyanate.
[3] : The polyisocyanate composition according to [1] or [2], in which a total content of a structural unit derived from the modified isocyanate (a2-1-2) and the modified isocyanate (a3) in the polyisocyanate (A) is 4.5% to 15% by mass.
[4]: The polyisocyanate composition according to any one of [1] to [3], in which a content percentage of a structural unit derived from 4,4'-diphenylmethane diisocyanate in structural units derived from diphenylmethane diisocyanates in the isocyanate-terminated prepolymer (a2) is 50 to 80%.
[5]: The polyisocyanate composition according to any one of [1] to [4], in which a total content percentage of a structural unit derived from 2,2'-diphenylmethane diisocyanate and a structural unit derived from 2,4'-diphenylmethane diisocyanate in structural units derived from diphenylmethane diisocyanates in the isocyanate-terminated prepolymer (a2) is 20 to 50%.
[6] : A polyurethane resin forming composition containing:
   the polyisocyanate composition according to any one of [1] to [5]; and
   a polyol (B).
[7] : The polyurethane resin forming composition according to [6], in which
   the polyol (B) contains:
   at least one polyol (b1) selected from the group consisting of castor oil, partially dehydrated castor oil, and a castor oil-modified polyol; and
   an amine-based compound (b2) having two or more hydroxy groups.
[8]: The polyurethane resin forming composition according to [7], in which a content of the amine-based compound (b2) in the polyol (B) is 30% by mass or less.
[9]: The polyurethane resin forming composition according to any one of [6] to [8], which has a crosslinking group density of 0.9 mmol/g or more.
[10]: The polyurethane resin forming composition according to any one of [6] to [9], which is for a membrane sealing material.
[11]: A membrane sealing material containing a cured product of the polyurethane resin forming composition according to any one of [6] to [10].
[12]: A membrane module including:
   a body portion;
   a membrane; and
   a membrane sealing material that seals a gap between the body portion and the membrane, in which
   the membrane sealing material is the membrane sealing material according to [11].
[13]: The membrane module according to [12], in which
   the membrane includes a plurality of hollow fiber membranes, and
   the membrane sealing material seals a gap between the body portion and at least a part of the hollow fiber membranes and at least a part of a gap between the hollow fiber membranes.

### Advantageous Effects of Invention

According to an aspect of the present disclosure, it is directed to providing a polyisocyanate composition and a polyurethane resin forming composition, which generate a small amount of eluates, contribute to the production of a membrane sealing material having a high hardness and excellent appearance, and have a low viscosity. An aspect of the present disclosure is also directed to providing a membrane sealing material and a membrane module, which are obtained using the polyurethane resin forming composition.

### Brief Description of Drawings

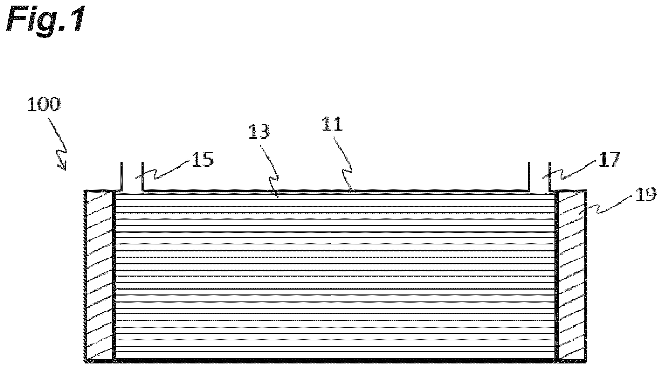

[FIG. 1] FIG. 1 is a conceptual drawing illustrating an example of the configuration of a membrane module according to an embodiment of the present disclosure.

### Description of Embodiments

Hereinafter, exemplary embodiments for implementing each aspect of the present disclosure will be described in more detail. However, the present disclosure is not limited to the following embodiments.

In this specification, the numerical range indicated using "to" indicates a range including the numerical values described before and after "to" as the minimum and maximum values, respectively. In a numerical range described in this specification, the upper or lower limit of the numerical range may be replaced with values shown in Examples. Moreover, the upper and lower limits described individually can be combined in any desired manner.

### [Polyisocyanate composition]

A polyisocyanate composition according to an embodiment of the present disclosure contains a polyisocyanate (A), and the polyisocyanate (A) contains a diphenylmethane diisocyanate (a1), an isocyanate-terminated prepolymer (a2), and a modified isocyanate (a3).

### <Diphenylmethane diisocyanate (a1)>

The diphenylmethane diisocyanate (a1) may be any generally available diphenylmethane diisocyanate (hereinafter also referred to as MDI). MDI may include isomers such as 4,4'-MDI, 2,4'-MDI, and 2,2'-MDI. In this specification, regarding MDI, 4,4'-MDI may be referred to as the main component and 2,4'-MDI and 2,2'-MDI may be referred to as isomer components.

In the diphenylmethane diisocyanate (a1), the content of 2,2'-MDI may be 0% by mass or more and 5% by mass or less, the content of 2,4'-MDI may be 0% by mass or more and 95% by mass or less, and the content of 4,4'-MDI may be 5% by mass or more and 100% by mass or less.

The content of the diphenylmethane diisocyanate (a1) in the polyisocyanate (A) may be, for example, 20% by mass or more and 55% by mass or less, and is preferably 25% by mass or more and 50% by mass or less, more preferably 30% by mass or more and 45% by mass or less.

### <Isocyanate-terminated prepolymer (a2)>

The isocyanate-terminated prepolymer (a2) is a reaction product of a polyisocyanate (a2-1) and a polyol (a2-2). The reaction of the polyisocyanate (a2-1) with the polyol (a2-2) may be a urethanization reaction.

The polyisocyanate (a2-1) contains a diphenylmethane diisocyanate (a2-1-1) and a modified isocyanate (a2-1-2).

The diphenylmethane diisocyanate (a2-1-1) may be any generally available diphenylmethane diisocyanate (hereinafter also referred to as MDI). In the diphenylmethane diisocyanate (a2-1-1), the content of 2,2'-MDI may be 0% by mass or more and 5% by mass or less, the content of 2,4'-MDI may be 0% by mass or more and 95% by mass or less, and the content of 4,4'-MDI may be 5% by mass or more and 100% by mass or less.

The content of the diphenylmethane diisocyanate (a2-1-1) in the polyisocyanate (a2-1) may be, for example, 85% by mass or more and 95.5% by mass or less, and is preferably 85% by mass or more and 95% by mass or less, more preferably 85.5% by mass or more and 94.5% by mass or less. When the content of the diphenylmethane diisocyanate (a2-1-1) is in this range, the polyurethane resin is even excellent in appearance and low elution properties.

The modified isocyanate (a2-1-2) is at least one modified product selected from the group consisting of a carbodiimide-modified diphenylmethane diisocyanate and a uretonimine-modified diphenylmethane diisocyanate.

The carbodiimide-modified diphenylmethane diisocyanate is a modified product formed by condensation between isocyanate groups in MDI accompanied by the generation of CO₂, and may be, for example, a compound represented by the following Formula (1-1). The uretonimine-modified diphenylmethane diisocyanate is a modified product formed by the reaction of a carbodiimide-modified diphenylmethane diisocyanate with MDI, and may be, for example, a compound represented by the following Formula (1-2).

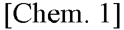

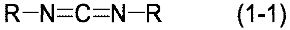

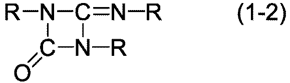

In Formula (1-1) and Formula (1-2), R denotes a group represented by Formula (2), and is preferably a group represented by Formula (2-1), Formula (2-2-1), Formula (2-2-2), or Formula (2-3), more preferably a group represented by Formula (2-1), Formula (2-2-1), or Formula (2-2-2), still more preferably a group represented by Formula (2-1).

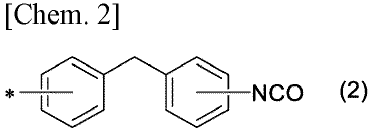

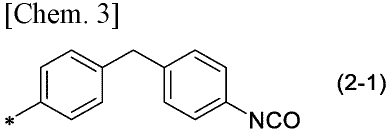

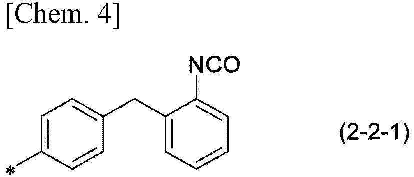

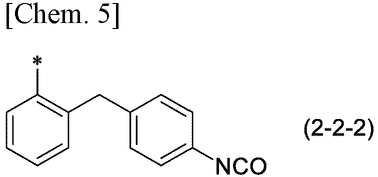

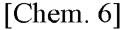

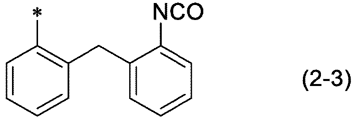

The content of the modified isocyanate (a2-1-2) in the polyisocyanate (a2-1) is 4.5% by mass or more and 15% by mass or less, preferably 5% by mass or more and 15% by mass or less, more preferably 5.5% by mass or more and 14.5% by mass or less. When the content of the modified isocyanate (a2-1-2) is in this range, the polyurethane resin is excellent in appearance and low elution properties.

The polyisocyanate (a2-1) may contain a polyisocyanate other than the diphenylmethane diisocyanate (a2-1-1) and the modified isocyanate (a2-1-2). For example, the polyisocyanate (a2-1) may further contain a urethane-modified product, a polymeric product, a urea-modified product, an allophanate-modified product, a biuret-modified product, a uretonimine-modified product, a uretdione-modified product or the like of a diphenylmethane diisocyanate.

The total content of the diphenylmethane diisocyanate (a2-1-1) and the modified isocyanate (a2-1-2) in the polyisocyanate (a2-1) may be, for example, 80% by mass or more or may be 90% by mass or more, 95% by mass or more, 97% by mass or more, or 99% by mass or more.

The polyol (a2-2) is not particularly limited as long as it is a compound having two or more hydroxy groups. Examples of the polyol (a2-2) include polyols such as castor oil, partially dehydrated castor oil, castor oil-modified polyols, low molecular weight polyols, polyether-based polyols, polyester-based polyols, polylactone-based polyols, and polyolefin-based polyols.

Examples of the castor oil-modified polyols include linear or branched castor oil-modified polyols obtained by the reaction of castor oil or castor oil fatty acids with at least one polyol selected from the group consisting of low molecular weight polyols and polyether-based polyols. Specific examples thereof include diglycerides of castor oil fatty acids and monoglycerides; mono-, di-, and triesters of castor oil fatty acids with trimethylol alkanes; and mono-, di-, and triesters of castor oil fatty acids with polypropylene glycol.

The main component of castor oil is triglyceride of ricinoleic acid, and castor oil includes hydrogenated castor oil. The main component of castor oil fatty acids is ricinoleic acid, and castor oil fatty acids include hydrogenated castor oil fatty acids.

Examples of the trimethylol alkanes include trimethylolmethane, trimethylolethane, trimethylolpropane, trimethylolbutane, trimethylolpentane, trimethylolhexane, trimethylolheptane, trimethyloloctane, trimethylolnonane, and trimethyloldecane.

The number average molecular weight of the castor oil-modified polyol is preferably 400 or more and 3000 or less, more preferably 500 or more and 2500 or less. When the number average molecular weight of the castor oil-modified polyol is 400 or more and 3000 or less, a cured resin can be formed which is even excellent in the physical properties, particularly the mechanical properties, required for a membrane sealing material.

In this specification, the number average molecular weight refers to a value measured by the method described below.

### <Measurement of number average molecular weight>

The number average molecular weight was determined by GPC measurement under the following conditions and method.

### (Conditions for measuring number average molecular weight)

(1) Measuring instrument: "HLC-8120 (trade name)" (manufactured by Tosoh Corporation)
(2) Column: Four columns consisting of two columns packed with a packing material, TSKgel G2000HXL and two columns packed with a packing material, TSKgel G3000HXL (both trade names, manufactured by Tosoh Corporation) were connected in series.
(3) Column temperature: 40°C
(4) Detector: RI (refractive index) meter
(5) Eluent: Tetrahydrofuran (THF) (flow rate: 1 mL/min., 40°C)
(6) Calibration curve: The calibration curve was created using trifunctional polypropylene polyols with the following trade names (all manufactured by Sanyo Chemical Industries, Ltd.).
   · "SANNIX GP-250" (number average molecular weight = 250)
   · "SANNIX GP-400" (number average molecular weight = 400)
   · "SANNIX GP-600" (number average molecular weight =600)
   · "SANNIX GP-1000" (number average molecular weight = 1000)
   · "SANNIX GP-3000" (number average molecular weight = 3000)
   · "SANNIX GP-4000" (number average molecular weight = 4000)
   · "SANNIX GP-5000" (number average molecular weight = 5000)
(7) Sample solution: Solution of 0.05 g of sample dissolved in 10 mL of THF

The average hydroxyl value of castor oil, partially dehydrated castor oil, and castor oil-modified polyol is preferably 20 mgKOH/g or more and 300 mgKOH/g or less, still more preferably 40 mgKOH/g or more and 250 mgKOH/g or less. When the average hydroxyl value is 20 mgKOH/g or more and 300 mgKOH/g or less, a cured resin can be formed which is even excellent in the physical properties, particularly the mechanical properties, required for a membrane sealing material. This makes it possible to improve the productivity of the membrane sealing material, and in turn, the productivity of the hollow fiber membrane module.

In this specification, the average hydroxyl value refers to a value measured by the method described below.

### <Measurement of hydroxyl value>

The hydroxyl value is a value measured by a method using an acetylation reagent in conformity with JIS K1557-1.

Examples of the low molecular weight polyols include dihydric polyols such as ethylene glycol, diethylene glycol, propylene glycol, 1,2-, 1,3- or 1,4-butanediol, 1,5-pentanediol, 3-methyl-1,5-pentanediol, 1,6-hexanediol, 1,8-octanediol, 1,10-decanediol, neopentyl glycol, and hydrogenated bisphenol A, and trihydric to octahydric polyols such as glycerin, trimethylolpropane, hexanetriol, pentaerythritol, sorbitol, and sucrose. The number average molecular weight of the low molecular weight polyols is preferably 50 or more and 200 or less.

Examples of the polyether-based polyols include adducts of the low molecular weight polyols with alkylene oxides (alkylene oxides having 2 to 8 carbon atoms, for example, ethylene oxide, propylene oxide, and butylene oxide); and ring-opening polymerization products of alkylene oxides. Specific examples thereof include polypropylene glycol, polyethylene glycol, polytetramethylene ether glycol, and a copolymer of ethylene oxide and propylene oxide. The number average molecular weight of the polyether-based polyols is preferably 200 or more and 7000 or less, more preferably 500 or more and 5000 or less from the viewpoint of even excellent shaping properties during production of the membrane sealing material.

Examples of the polyester-based polyols include polyester-based polyols obtained by condensation polymerization of polycarboxylic acids and polyols.

Examples of the polycarboxylic acids used in the polyester-based polyols include aliphatic saturated and unsaturated polycarboxylic acids such as adipic acid, azelaic acid, dodecanedioic acid, maleic acid, fumaric acid, itaconic acid, dimerized linoleic acid, phthalic acid, isophthalic acid, and terephthalic acid; and aromatic polycarboxylic acids.

Examples of the polyols used in the polyester-based polyols include the low molecular weight polyols and polyether-based polyols described above.

The number average molecular weight of the polyester-based polyols is preferably 200 or more and 5000 or less, still more preferably 500 or more and 3000 or less. When the number average molecular weight of the polyester-based polyols is 200 or more and 5000 or less, the shaping properties during the formation of membrane sealing material are particularly excellent.

Examples of the polylactone-based polyols include polyols obtained by addition polymerization of ε-caprolactone, α-methyl-ε-caprolactone, ε-methyl-ε-caprolactone, β-methyl-δ-valerolactone and the like to a polymerization initiator such as glycols and triols in the presence of a catalyst such as an organometallic compound, a metal chelate compound, or a fatty acid metal acyl compound. The number average molecular weight of the polylactone-based polyols is preferably 200 or more and 5000 or less, still more preferably 500 or more and 3000 or less. When the number average molecular weight of the polylactone-based polyols is 200 or more and 5000 or less, the shaping properties during the formation of membrane sealing material are particularly excellent.

Examples of the polyolefin-based polyols include polybutadiene-based polyols in which hydroxyl groups are introduced into the terminals of polybutadiene or copolymers of butadiene and styrene or acrylonitrile. Other examples thereof include polyether ester polyols obtained by addition reaction of alkylene oxides, for example, ethylene oxide and propylene oxide to polyesters having carboxyl groups and hydroxyl groups at the terminal.

Among these, the polyol (a2-2) is preferably castor oil, partially dehydrated castor oil, or a castor oil-modified polyol in consideration of compatibility with the polyol (B), and more preferably includes partially dehydrated castor oil from the viewpoint of low elution properties.

The isocyanate-terminated prepolymer (a2) is a reaction product of a polyisocyanate (a2-1) and a polyol (a2-2). The reaction of the polyisocyanate (a2-1) with the polyol (a2-2) may be a commonly conducted urethanization reaction.

The conditions for the reaction of the polyisocyanate (a2-1) with the polyol (a2-2) are not particularly limited. The reaction temperature may be, for example, 40°C or more and 80°C or less.

The content percentage of the structural unit derived from 4,4'-diphenylmethane diisocyanate in the structural units derived from diphenylmethane diisocyanates in the isocyanate-terminated prepolymer (a2) is preferably 50% by mass or more and 80% by mass or less, more preferably 52% by mass or more and 79% by mass or less, still more preferably 54% by mass or more and 79% by mass or less. When the percentage of the structural unit derived from 4,4'-diphenylmethane diisocyanate is in this range, the polyisocyanate (A) has a lower viscosity and excessive polymerization can be further suppressed.

The content percentage of structural units derived from isomer components consisting of 4,4'-diphenylmethane diisocyanate (4,4'-MDI) and 2,2'-diphenylmethane diisocyanate (2,2'-MDI) in the structural units derived from diphenylmethane diisocyanates in the isocyanate-terminated prepolymer (a2) is preferably 20% by mass or more and 50% by mass or less, more preferably from 21% by mass or more and 48% by mass or less, still more preferably from 21% by mass or more and 46% by mass or less. When the content percentage of structural units derived from isomer components is in this range, the polyisocyanate (A) has a lower viscosity and excessive polymerization can be further suppressed.

The content of the isocyanate-terminated prepolymer (a2) in the polyisocyanate (A) may be, for example, 30% by mass or more and 75.5% by mass or less, and is preferably 35% by mass or more and 70.5% by mass or less, more preferably 40% by mass or more and 65.5% by mass or less.

### <Modified isocyanate (a3)>

The modified isocyanate (a3) is a modified product of a diphenylmethane diisocyanate, and preferably contains at least one modified product (a3-1) selected from the group consisting of a carbodiimide-modified diphenylmethane diisocyanate and a uretonimine-modified diphenylmethane diisocyanate. Examples of the carbodiimide-modified diphenylmethane diisocyanate and uretonimine-modified diphenylmethane diisocyanate include the same ones as those of the modified isocyanate (a2-1-2).

The modified isocyanate (a3) may further contain a urethane-modified product, a polymeric product, a urea-modified product, an allophanate-modified product, a biuret-modified product, a uretonimine-modified product, a uretdione-modified product or the like of a diphenylmethane diisocyanate.

The content of the modified product (a3-1) in the modified isocyanate (a3) may be, for example, 80% by mass or more or may be 90% by mass or more, 95% by mass or more, 97% by mass or more, or 99% by mass or more.

The total content of the structural unit derived from the modified isocyanate (a2-1-2) and the modified product (a3-1) in the polyisocyanate (A) is preferably 4.5% by mass or more and 15% by mass or less, more preferably 5.0% by mass or more and 15% by mass or less, still more preferably 5.5% by mass or more and 14.5% by mass or less.

The total content of the structural unit derived from the modified isocyanate (a2-1-2) and the modified isocyanate (a3) in the polyisocyanate (A) is preferably 4.5% by mass or more and 15% by mass or less, more preferably 5.0% by mass or more and 15% by mass or less, still more preferably 5.5% by mass or more and 14.5% by mass or less. When the total content of the structural unit derived from the modified isocyanate (a2-1-2) and the modified isocyanate (a3) is in this range, the polyurethane resin is excellent in appearance and low elution properties.

The polyisocyanate (A) may contain a polyisocyanate other than the diphenylmethane diisocyanate (a1), isocyanate-terminated prepolymer (a2), and modified isocyanate (a3).

The total content of the diphenylmethane diisocyanate (a1), isocyanate-terminated prepolymer (a2), and modified isocyanate (a3) in the polyisocyanate (A) may be, for example, 80% by mass or more or may be 90% by mass or more, 95% by mass or more, 97% by mass or more, or 99% by mass or more.

The content of isocyanate groups in the polyisocyanate (A) is preferably 13% by mass or more and 21% by mass or less, more preferably 13.5% by mass or more and 20.5% by mass or less, particularly preferably 14% by mass or more and 20% by mass or less. When the content of isocyanate groups is in these ranges, the polyurethane resin is even excellent in shaping properties and adhesive strength.

### [Polyurethane resin forming composition]

A polyurethane resin forming composition according to an embodiment of the present disclosure contains the above-described polyisocyanate composition and a polyol (B).

### <Polyol (B)>

The polyol (B) may be any compound having two or more hydroxy groups. The polyol (B) preferably contains at least one polyol (b1) selected from the group consisting of castor oil, partially dehydrated castor oil, and a castor oil-modified polyol and an amine-based compound (b2) having two or more hydroxy groups.

Examples of the polyol (b1) include castor oil, partially dehydrated castor oil and castor oil-modified polyols exemplified as the polyol (a2-2).

The content of the polyol (b1) in the polyol (B) is preferably 70% by mass or more, more preferably 70% by mass or more and 95% by mass or less, still more preferably 75% by mass or more and 90% by mass or less.

Examples of the amine-based compound (b2) include amine-based compounds such as alkyl diethanolamines such as linear or branched butyldiethanolamine, hexyldiethanolamine, octyldiethanolamine, lauryldiethanolamine, myristyldiethanolamine, cetyldiethanolamine, and stearyldiethanolamine; low molecular weight polyamines; and low molecular weight amino alcohols.

More specific examples of the amine-based compound include oxyalkylated derivatives of amino compounds such as N,N,N',N'-tetrakis[2-hydroxypropyl]ethylenediamine and N,N,N',N'-tetrakis[2-hydroxyethyl]ethylenediamine, which are a propylene oxide or ethylene oxide adduct of ethylenediamine; mono-, di-, and triethanolamines; and aminoalcohol derivatives such as N-methyl-N,N'-diethanolamine.

Among these, preferred are propylene oxide or ethylene oxide adducts of amino compounds such as ethylenediamine, and most preferred is N,N,N',N'-tetrakis[2-hydroxypropyl]ethylenediamine. As N,N,N',N'-tetrakis[2-hydroxypropyl]ethylenediamine is used, even greater effects are exerted in the improvement in properties during shaping, the decrease in eluates, and the like.

The content of the amine-based compound (b2) in the polyol (B) is preferably 30% by mass or less, more preferably 5% by mass or more and 30% by mass or less, still more preferably 10% by mass or more and 25% by mass or more. When the proportion of the amine-based compound (b2) in the polyol (B) is 30% by mass or less, the reactivity is further prevented from becoming too high, the workability is further improved, and the packing properties are secured as well as the hardness of the obtained membrane sealing material is further prevented from becoming too high. When the proportion of the amine-based compound (b2) in the polyol (B) is 5% by mass or more, the amine-based compound (b2) exhibits its function more favorably and exerts even greater effects.

The polyol (B) may further contain a polyol (b3) other than the polyol (b1) and the amine-based compound (b2). Examples of the polyol (b3) include the various polyols exemplified above as the polyol (a2-2).

The total content of the polyol (b1) and the amine-based compound (b2) in the polyol (B) may be, for example, 50% by mass or more or may be 80% by mass or more, 90% by mass or more, 95% by mass or more, 97% by mass or more, or 99% by mass or more.

The hydroxyl value of the polyol (B) is preferably 50 mgKOH/g or more and 1000 mgKOH/g or less, and is more preferably 75 mgKOH/g or more and 750 mgKOH/g or less from the viewpoint of ease of handling of the polyol (B). From the viewpoint of excellent shaping properties and adhesive strength of the polyurethane resin, the hydroxyl value of the polyol (B) is more preferably 100 mgKOH/g or more and 500 mgKOH/g or less.

The viscosity of the polyol (B) at 25°C is preferably 100 mPa·s or more and 6000 mPa·s or less, and is more preferably 150 mPa·s or more and 4000 mPa·s or less from the viewpoint of ease of handling of the polyol (B). From the viewpoint of excellent shaping properties of the polyurethane resin, the viscosity of the polyol (B) at 25°C is still more preferably 200 mPa·s or more and 2000 mPa·s or less.

The content of the monomer of MDI is preferably 25% by mass or less with respect to the total amount of the polyurethane resin forming composition since the low molecular weight reaction products of MDI with glycerin can be further decreased.

The polyurethane resin forming composition may be of a two-component type. In other words, the polyurethane resin forming composition may contain, for example, a first agent containing a polyisocyanate composition and a second agent containing a polyol (B). Such a polyurethane resin forming composition can form a polyurethane resin by mixing of the first agent with the second agent.

The viscosity (also referred to as the mixed viscosity) of the polyurethane resin forming composition after the elapse of 60 seconds from the start of mixing of the polyisocyanate composition with the polyol (B) (for example, mixing of the first agent with the second agent) is preferably 400 mPa.s or more and 2100 mPa·s or less, more preferably 500 mPa·s or more and 1800 mPa·s or less.

The crosslinking group density in the polyurethane resin forming composition is preferably 0.9 mmol/g or more with respect to the total mass of the polyisocyanate (A) and the polyol (B) from the viewpoint of further suppressing elution into the solvent, and is more preferably 0.9 mmol/g or more and 1.2 mmol/g or less from the viewpoint of shaping properties.

The crosslinking group density means the total contained density of groups capable of forming crosslinks and groups which have already formed crosslinks.

Therefore, when the crosslinking group density is explained by taking a trifunctional polyol (for example, glycerin) as an example, one hydroxyl group in one molecule forms a crosslink and the remaining two hydroxyl groups do not contribute to the crosslinking, and thus in this case, there is one crosslinking group. In other words, in the case of a polyurethane resin forming composition containing a trifunctional polyol, the content of crosslinking groups derived from the trifunctional polyol is synonymous with the content of the trifunctional polyol since the trifunctional polyol has one crosslinking group.

The polyurethane resin forming composition according to an embodiment of the present disclosure has a suppressed amount of low molecular weight reaction products of MDI with glycerin eluted, is excellent in formability, and contributes to the production of a membrane sealing material having an excellent appearance. In other words, the polyurethane resin forming composition may be a polyurethane resin forming composition for membrane sealing materials that is suitable for use as a membrane sealing material.

### <Method for producing polyisocyanate composition>

A method for producing a polyisocyanate composition according to an embodiment of the present disclosure includes:
obtaining an isocyanate-terminated prepolymer (a2) that is a reaction product of a polyisocyanate (a2-1) and a polyol (a2-2); and
mixing a diphenylmethane diisocyanate (a1), an isocyanate-terminated prepolymer (a2), and a modified isocyanate (a3) to obtain a polyisocyanate composition containing a polyisocyanate (A).

The polyisocyanate (a2-1), the polyol (a2-2), the isocyanate-terminated prepolymer (a2), the diphenylmethane diisocyanate (a1) and the modified isocyanate (a3) may be the same as the respective components in the polyisocyanate composition described above. The mixing ratio of these components may be the same as the mixing ratio of the respective components in the polyisocyanate composition described above.

### <Method for producing polyurethane resin forming composition>

A method for producing a polyurethane resin forming composition according to an embodiment of the present disclosure includes:
obtaining an isocyanate-terminated prepolymer (a2) that is a reaction product of a polyisocyanate (a2-1) and a polyol (a2-2);
mixing a diphenylmethane diisocyanate (a1), an isocyanate-terminated prepolymer (a2), and a modified isocyanate (a3) to obtain a polyisocyanate composition containing a polyisocyanate (A); and
preparing a polyol (B).

The polyisocyanate (a2-1), the polyol (a2-2), the isocyanate-terminated prepolymer (a2), the diphenylmethane diisocyanate (a1), the modified isocyanate (a3) and the polyol (B) may be the same as the respective components in the polyurethane resin forming composition described above. The mixing ratio of these components may be the same as the mixing ratio of respective components in the polyurethane resin forming composition described above.

### <Membrane sealing material (second embodiment)>

A membrane sealing material according to an embodiment of the present disclosure includes a cured product of the polyurethane resin forming composition described above.

The membrane sealing material can be suitably formed by reacting and curing the polyisocyanate (A) and the polyol (B) under a temperature condition of 0°C or more and 100°C or less, preferably 20°C or more and 80°C or less, still more preferably 30°C or more and 60°C or less.

The gelation time can be shortened by shaping the membrane sealing material in a high temperature region, but since shaping shrinkage is likely to occur in a high temperature region, shaping shrinkage can also be suppressed by lowering the reaction temperature by the addition of a catalyst.

### <Membrane module (third embodiment)>

A membrane module according to an embodiment of the present disclosure includes a body portion, a membrane, and a membrane sealing material that seals a gap between the body portion and the membrane.

The membrane may include a plurality of hollow fiber membranes. At this time, it is preferable that the membrane sealing material seals the gap between the body portion and at least a part of the hollow fiber membranes and at least a part of the gap between the hollow fiber membranes.

Next, the membrane module according to an embodiment of the present disclosure will be described in more detail with reference to the drawing.

FIG. 1 is a conceptual drawing illustrating an example of the configuration of the membrane module according to an embodiment of the present disclosure.

A membrane module (hollow fiber membrane module) 100 illustrated in FIG. 1 includes a housing (body portion) 11, and inside which a plurality of hollow fiber membranes (membranes) 13 are packed. For example, in the case of a hollow fiber membrane module used as a dialyzer, several thousands to several tens of thousands of hollow fiber membranes are packed.

The housing 11 has a cylindrical shape. A membrane sealing material 19 is provided at each of the two ends (the left and right ends in FIG. 1) inside the housing 11. The membrane sealing material fills and seals the gaps between the hollow fiber membranes 13 and the gaps between the hollow fiber membranes 13 and the inner wall of the housing 11 and also binds a plurality of hollow fiber membranes 13 together.

A first fluid inlet 15 and a first fluid outlet 17 are provided on the side surface of the housing 11, and a first fluid (gas or liquid) flows in and out of the housing 11 through these. The first fluid flowing in through the first fluid inlet 15 passes through the gaps (outside the hollow fiber membranes) between the plurality of hollow fiber membranes 13 packed in the housing 11 while coming into contact with the hollow fiber membranes 13, and is discharged through the first fluid outlet 17. Meanwhile, since the membrane sealing material 19 is not present inside the hollow fiber membranes 13, a second fluid (gas or liquid) flows in and out of the hollow fiber membranes 13 through a second inlet (one end side) and a second outlet (the other end side) provided in a cap member (not illustrated). Then, as the first fluid and the second fluid come into contact with each other via the hollow fiber membranes 13, mass transfer from one fluid to the other fluid (or further from the other fluid to one fluid) occurs. For example, in the case of a hollow fiber membrane type dialyzer, waste products and excess water in the blood are transferred to the dialysate as the dialysate comes into contact with the blood.

The membrane module 100 illustrated in FIG. 1 has a configuration in which the membrane module 100 includes the plurality of hollow fiber membranes 13 and the membrane sealing material 19 seals the gaps at both ends of the hollow fiber membranes 13, but the membrane module according to the present embodiment is not limited to this configuration. For example, the membrane module may be a single membrane or a plurality of membranes having various shapes such as a flat membrane and a spiral membrane. The membrane sealing material is not limited to a configuration in which the membrane sealing material is provided at both ends of the membrane, but may be provided only at a part of the membrane (one end in the case of a hollow fiber type), or may be provided at all end parts of the membrane, for example, at all edge parts of a flat membrane. The sealing material may have a configuration in which the sealing material is provided at a part of the membrane other than the end part to seal the part. The housing 11 of the membrane module 100 illustrated in FIG. 1 has a cylindrical shape, but may have any shape other than the cylindrical shape.

In the membrane module 100, the gaps between the plurality of hollow fiber membranes 13 at the end part of the bundle of the hollow fiber membranes 13 are sealed with the polyurethane resin forming composition for membrane sealing materials described above, and the composition is cured to form the membrane sealing material described above (the gaps between the hollow fiber membranes are sealed with the membrane sealing material).

The membrane module according to an embodiment of the present disclosure favorably suppresses the generation of extractables, and therefore can be suitably used as a module for medical purposes and water treatment. Specific examples of the membrane module include plasma separators, artificial lungs, artificial kidneys, artificial livers, and household and industrial water treatment systems.

### Examples

Hereinafter, the present invention will be described based on Examples, but the present invention is not to be construed as being limited to these Examples. In the following description, "%" means "% by mass" unless otherwise stated.

The following components were used in Examples and Comparative Examples.

### [Polyisocyanate (A)]

· a-1;
   4,4'-MDI (manufactured by Tosoh Corporation, product name MILLIONATE MT, isocyanate group content = 33.6%, carbodiimide/uretonimine-modified product content = 0%, isomer = about 1%, crosslinking group density = 0 mmol/g)
· a-2;
   Mixture of 2,4'-MDI and 4,4'-MDI (manufactured by Tosoh Corporation, product name MILLIONATE NM, isocyanate group content = 33.6%, carbodiimide/uretonimine-modified product content = 0%, isomer = about 55%, crosslinking group density = 0 mmol/g)
· a-3;
   Carbodiimide-modified product of 4,4'-MDI (manufactured by Tosoh Corporation, product name MILLIONATE MTL-C, isocyanate group content = 28.6%, carbodiimide/uretonimine-modified product content = 30%, isomer = about 1%, crosslinking group density = 0.45 mmol/g)

### [Polyol (B)]

· b-1;
   Castor oil (manufactured by ITOH OIL CHEMICALS CO., LTD., product name URIC H-30, OHV = 160 mgKOH/g, viscosity (25°C) = 690 mPa·s, crosslinking group density = 0.74 mmol/g)
· b-2;
   Partially dehydrated castor oil (manufactured by ITOH OIL CHEMICALS CO., LTD, molecular weight 950, OHV = 119 mgKOH/g, viscosity (25°C) = 420 mPa·s, crosslinking group density = 0 mmol/g)
· b-3;
   Polymerized castor oil (manufactured by ITOH OIL CHEMICALS CO., LTD., product name POLYCASTOR #30, OHV = 155 mgKOH/g, viscosity (25°C) = 4800 mPa·s, crosslinking group density = 1.84 mmol/g)
· b-4;
   N,N,N',N'-Tetrakis[2-hydroxypropyl]ethylenediamine (manufactured by ADEKA Corporation, product name EDP-300, OHV = 760 mgKOH/g, viscosity (25°C) = 50000 mPa·s, crosslinking group density = 2.63 mmol/g)
· b-5;
   N-Lauryldiethanolamine (manufactured by Kao Corporation, product name: AMIET 102, OHV = 394 mgKOH/g, viscosity (25°C) = 100 mPa·s, crosslinking group density = 0 mmol/g)

### (Crosslinking group density calculating method)

The crosslinking group density in the table below was calculated using the following equation from the number of functional groups and hydroxyl value disclosed by each raw material manufacturer, as well as the number average molecular weight obtained by GPC measurement. Meanwhile, the GPC measurement was carried out in conformity with the conditions in <Measurement of MDI content> to be described later. Crosslinking group density (mmol/g) = 1000 × (Number of functional groups - 2)/Number average molecular weight = (Hydroxyl value × (Number of functional groups - 2))/(56.11 × Number of functional groups)

### <Example A-1: Preparation of polyisocyanate composition>

The respective raw materials shown in step 1 of Table 1 were charged at the mixing ratio described in Table 1, and stirring and mixing was performed at 70°C for 4 hours to conduct the reaction, thereby obtaining an isocyanate-terminated prepolymer (a2). After the reaction, the respective raw materials shown in step 2 of Table 1 were added at the mixing ratio described in Table 1, and stirring and mixing was performed at 55°C for 2 hours, thereby obtaining a polyisocyanate composition (A-1) containing a polyisocyanate (A).

### <Examples A-2 to A-7>

Polyisocyanate compositions were obtained in the same manner as in Example A-1, except that the mixing ratio of the respective raw materials was changed to the mixing ratio described in Table 1 or Table 2.

### <Comparative Examples A'-1 to A'-3>

Polyisocyanate compositions were obtained in the same manner as in Example A-1, except that the mixing ratio of the respective raw materials was changed to the mixing ratio described in Table 3.

### <Comparative Examples A'-4 to A'-6>

The respective raw materials shown in Table 4 were charged at the mixing ratios described in Table 4, and stirring and mixing was performed at 70°C for 4 hours to conduct the reaction, thereby obtaining polyisocyanate compositions.

**[Table 1]**

| | | Example A-1 | Example A-2 | Example A-3 | Example A-4 |
|---|---|---|---|---|---|
| Step 1 | a-1 (g) | 0 | 0 | 0 | 0 |
| | a-2 (g) | 220 | 171 | 170 | 171 |
| | a-3 (g) | 50 | 39 | 50 | 52 |
| | b-1 (g) | 0 | 39 | 0 | 39 |
| | b-2 (g) | 335 | 349 | 390 | 349 |
| Proportion of modified MDI in raw materials in step 1 (%) | | 5.6 | 5.6 | 6.8 | 7.0 |
| Proportion of 2,4'-MDI in raw materials in step 1 (%) | | 44.8 | 44.8 | 42.5 | 42.2 |
| Step 2 | a-1 (g) | 75 | 79 | 80 | 79 |
| | a-2 (g) | 0 | 0 | 0 | 0 |
| | a-3 (g) | 320 | 323 | 310 | 310 |
| Properties of composition | MDI content (%) | 40.9 | 35.0 | 35.2 | 34.9 |
| | Modified MDI content (%) | 11.1 | 10.9 | 10.8 | 10.9 |
| | NCO content (%) | 17.5 | 15.2 | 15.3 | 15.2 |
| | Viscosity at 25°C (mPa·s) | 1270 | 5300 | 3770 | 4910 |
| | Crosslinking group density (mmol/g) | 0.16 | 0.19 | 0.16 | 0.19 |

**[Table 2]**

| | | Example A-5 | Example A-6 | Example A-7 |
|---|---|---|---|---|
| Step 1 | a-1 (g) | 0 | 80 | 0 |
| | a-2 (g) | 170 | 90 | 220 |
| | a-3 (g) | 150 | 50 | 50 |
| | b-1 (g) | 0 | 0 | 0 |
| | b-2 (g) | 390 | 390 | 335 |
| Proportion of modified MDI in raw materials in step 1 (%) | | 14.1 | 6.8 | 5.6 |
| Proportion of 2,4'-MDI in raw materials in step 1 (%) | | 29.2 | 22.5 | 44.8 |
| Step 2 | a-1 (g) | 78 | 80 | 0 |
| | a-2 (g) | 0 | 0 | 75 |
| | a-3 (g) | 212 | 310 | 320 |
| Properties of composition | MDI content (%) | 34.2 | 34.2 | 40.9 |
| | Modified MDI content (%) | 10.9 | 10.8 | 11.1 |
| | NCO content (%) | 15.2 | 15.3 | 17.5 |
| | Viscosity at 25°C (mPa·s) | 3400 | 4300 | 1350 |
| | Crosslinking group density (mmol/g) | 0.16 | 0.16 | 0.16 |

**[Table 3]**

| | | Comparative Example A'-1 | Comparative Example A'-2 | Comparative Example A'-3 |
|---|---|---|---|---|
| Step 1 | a-1 (g) | 0 | 0 | 170 |
| | a-2 (g) | 171 | 171 | 0 |
| | a-3 (g) | 0 | 26 | 50 |
| | b-1 (g) | 39 | 39 | 0 |
| | b-2 (g) | 349 | 349 | 390 |
| Proportion of modified MDI in raw materials in step 1 (%) | | 0.0 | 4.0 | 6.8 |
| Proportion of 2,4'-MDI in raw materials in step 1 (%) | | 55.0 | 47.7 | 0.0 |
| Step 2 | a-1 (g) | 79 | 79 | 80 |
| | a-2 (g) | 0 | 0 | 0 |
| | a-3 (g) | 362 | 336 | 310 |
| Properties of composition | MDI content (%) | 35.7 | 35.2 | 35.2 |
| | Modified MDI content (%) | 10.9 | 10.9 | 10.8 |
| | NCO content (%) | 15.2 | 15.2 | 15.3 |
| | Viscosity at 25°C (mPa·s) | 6660 | 5630 | 4740 |
| | Crosslinking group density (mmol/g) | 0.19 | 0.19 | 0.16 |

**[Table 4]**

| | | Comparative Example A'-4 | Comparative Example A'-5 | Comparative Example A'-6 |
|---|---|---|---|---|
| Step 1 | a-1 (g) | 30 | 0 | 0 |
| | a-2 (g) | 220 | 188 | 0 |
| | a-3 (g) | 362 | 433 | 1000 |
| | b-1 (g) | 39 | 38 | 0 |
| | b-2 (g) | 349 | 341 | 0 |
| Proportion of modified MDI in raw materials in step 1 (%) | | 17.7 | 20.9 | 30.0 |
| Proportion of 2,4'-MDI in raw materials in step 1 (%) | | 19.8 | 16.7 | 0.0 |
| Properties of composition | MDI content (%) | 33.0 | 32.5 | 75.0 |
| | Modified MDI content (%) | 10.9 | 13.0 | 30.0 |
| | NCO content (%) | 15.2 | 15.1 | 28.6 |
| | Viscosity at 25°C (mPa·s) | 2753 | 3300 | 50 |
| | Crosslinking group density (mmol/g) | 0.19 | 0.22 | 0.45 |

In the tables, the MDI content is shown as a value measured by the following method. The modified MDI content in the tables is the total amount of modified MDI mixed in step 1 and modified MDI mixed in step 2, and can also be said to be the sum of the content of the modified isocyanate and the content of the structural unit derived from the modified isocyanate in the prepolymer. In the tables, the NCO content is the content of isocyanate groups in the composition, and is measured by the following method. The viscosity at 25°C in the tables is measured by the following method.

### <Measurement of MDI content>

The MDI content (% by mass) was determined by GPC (gel permeation chromatography) measurement under the following conditions and method.

### · Measurement conditions

(1) Measuring instrument: "HLC-8120 (trade name)" (manufactured by Tosoh Corporation)
(2) Column temperature: 40°C
(3) Detector: RI (refractive index) meter
(4) Column: Columns each packed with one of three packing materials, TSKgel G3000HXL, TSKgel G2000HXL, and TSKgel G1000HXL (all trade names, manufactured by Tosoh Corporation) were connected in series for measurement.
(5) Eluent: Tetrahydrofuran (THF) (flow rate: 1 mL/min, 40°C)
(6) Calibration curve: The calibration curve was created using polystyrenes (TSK standard POLYSTYRENE) with the following grade. F-2 (1.81×10⁴) F-1 (1.02×10⁴) A-5000 (5.97×10³) A-2500 (2.63×10³) A-500 (Mw = 6.82×10², 5.78×10², 4.74×10², 3.70×10², 2.66×10²) Toluene (Mw = 92)
(7) Sample: Solution of 0.05 g of sample dissolved in 10 mL of THF

### · Measuring method

First, polystyrene was used as a standard substance, and a calibration curve was obtained from a chart obtained through detection by the refractive index difference. Next, for each sample, the mass percentage of the peak in the vicinity of a peak top molecular weight (number average molecular weight) of 250, which indicates MDI, was determined from a chart obtained through detection by the refractive index difference based on the same calibration curve.

### <Measurement of NCO content>

The measurement of NCO content was performed in conformity with JIS K1603-1: 2007.

### <Preparation Examples B-1 to B-6>

The respective raw materials shown in Table 5 were charged at the composition ratios described in Table 5, and stirring and homogeneous mixing was performed to obtain polyols B-1 to B-6.

**[Table 5]**

| | Preparation Example B-1 | Preparation Example B-2 | Preparation Example B-3 | Preparation Example B-4 | Preparation Example B-5 | Preparation Example B-6 |
|---|---|---|---|---|---|---|
| b-1 (g) | 60 | 58 | 38 | 100 | 36 | 58 |
| b-2 (g) | 12.5 | 14 | 22 | 0 | 22 | 18 |
| b-3 (g) | 10 | 5 | 18 | 0 | 18 | 0 |
| b-4 (g) | 17.5 | 23 | 23 | 0 | 20.7 | 23 |
| b-5 (g) | 0 | 0 | 0 | 0 | 3.3 | 1 |
| Hydroxyl value (KOHmg/g) | 260 | 292 | 285 | 160 | 282 | 294 |
| Viscosity at 25°C (mPa·s) | 1100 | 1270 | 1570 | 690 | 1420 | 1230 |
| Crosslinking group density (mmol/g) | 1.78 | 2.05 | 2.09 | 0.74 | 1.96 | 1.96 |

### <Examples 1 to 9 and Comparative Examples 1 to 6>

A polyisocyanate composition (main agent) and a polyol (curing agent) were mixed at the compositions shown in Tables 6, 7, and 8 to prepare polyurethane resin forming compositions, and the evaluation was performed by the following method. The results are shown in Tables 6, 7, and 8.

### <Mixed viscosity and pot life test>

The main agent and the curing agent, the temperature of which had been adjusted to 45°C in advance, were weighed and mixed at mixing to be isocyanate groups/hydroxyl groups of 1.00 to 1.05 (mole ratio) so that the sum was 50 g, thereby obtaining a mixture.

Next, the viscosity of the mixture was measured in an atmosphere of 25°C using a rotational viscometer (B type, No. 4 rotor). The viscosity after the elapse of 60 seconds from the start of mixing of the main agent with the curing agent was determined as the mixed viscosity. The time required for the viscosity of the mixture to reach 50000 mPa·s was determined as the pot life (seconds).

When the mixed viscosity was 1900 mPa·s or less, it was judged that the packing properties were favorable. When the pot life was within 300 seconds, it was judged that the fast curability was favorable.

### <Hardness (10 second value)>

The main agent and the during agent were each adjusted to 45°C, and 60 g of the main agent and then 40 g of the curing agent were quickly weighed and put into a 500 ml plastic cup. These were mixed with a spatula for 30 seconds and then vacuum degassed at 50 mmHg for 60 seconds. After degassing, 80 g of the mixture was transferred to a 300 ml plastic cup and aged at 45°C for 48 hours. The cured product was taken out of the plastic cup and left to stand in an environment of 25°C for 4 hours, and the hardness was measured using a Durometer D hardness tester. The hardness meter was pressed against the cured product and the reading after 10 seconds was determined as the hardness (10 second value).

### <Measurement of low molecular weight elution value>

### · Preparation of test sample

The main agent and the curing agent were mixed so that the liquid temperature was 45°C, the mole ratio of isocyanate group/hydroxy group was 1.00 to 1.05, and the total mass was 30 g, to obtain a liquid mixture.

The obtained liquid mixture was stirred for 15 seconds, and 10 g of glycerin was further added (assuming glycerin to be contained in the hollow fibers), and stirring was performed for 15 seconds, thereby obtaining a composition. This composition was left to stand in a thermostatic chamber at a temperature of 50°C for a time of 10 minutes as the primary curing conditions and at a temperature of 45°C for a time of 2 days as the secondary curing conditions, thereby obtaining a test sample.

### · Measurement of low molecular weight elution value

The test sample was cut into a fan shape, and the cut sample was weighed by 20 g, immersed in 100 mL of purified water heated to 40°C in advance, and left to stand at 40°C for 2 hours to extract low molecular weight eluates into the purified water. Next, 10 ml of the obtained extraction liquid was placed in a 50 ml measuring flask by decantation, the extraction liquid was adjusted to 50 ml with purified water, and the liquid thus prepared was used as a test liquid. The UV absorbance of the test liquid was then measured (manufactured by SHIMADZU CORPORATION, product name UV-1500). The value that is one tenth of the maximum absorbance value at 240 to 245 nm was taken as the low molecular weight elution value. If the low molecular weight elution value is 0.05 or less, it can be judged that the amount of eluates is small.

### <Evaluation of whiteness>

### · Preparation of sample for whiteness evaluation

A sample for whiteness evaluation was obtained by the same method as in <Hardness (10 second value)>.

### · Evaluation of whiteness

The whiteness of the obtained sample for whiteness evaluation was measured. The measurement of whiteness was performed in conformity with JIS-P 8123. The whiteness is preferably 10 or less, more preferably 8 or less.

**[Table 6]**

| | Example 1 | Example 2 | Example 3 | Example 4 | Example 5 |
|---|---|---|---|---|---|
| Main agent | A-1 | A-2 | A-3 | A-4 | A-5 |
| Curing agent | B-1 | B-2 | B-3 | B-2 | B-2 |
| NCO/OH (mole ratio) | 1.01 | 1.00 | 1.03 | 1.00 | 1.00 |
| Crosslinking group density (mmol/g) | 0.92 | 0.95 | 0.95 | 0.95 | 0.94 |
| Mixed viscosity (mPa·s) | 1350 | 1860 | 1730 | 1700 | 1600 |
| Pot life (seconds) | 500 | 200 | 207 | 198 | 215 |
| Hardness | 64 | 55 | 56 | 55 | 55 |
| Low molecular weight elution value | 0.049 | 0.048 | 0.044 | 0.049 | 0.048 |
| Whiteness | 6.3 | 8.4 | 7.6 | 7.1 | 6.8 |

**[Table 7]**

| | Example 6 | Example 7 | Example 8 | Example 9 |
|---|---|---|---|---|
| Main agent | A-6 | A-3 | A-3 | A-7 |
| Curing agent | B-3 | B-5 | B-6 | B-1 |
| NCO/OH (mole ratio) | 1.03 | 1.04 | 1.00 | 1.01 |
| Crosslinking group density (mmol/g) | 0.95 | 0.90 | 0.90 | 0.92 |
| Mixed viscosity (mPa·s) | 1850 | 1600 | 1530 | 1320 |
| Pot life (seconds) | 200 | 200 | 205 | 530 |
| Hardness | 57 | 54 | 54 | 64 |
| Low molecular weight elution value | 0.049 | 0.042 | 0.048 | 0.050 |
| Whiteness | 7.0 | 7.5 | 7.0 | 6.3 |

**[Table 8]**

| | Comparative Example 1 | Comparative Example 2 | Comparative Example 3 | Comparative Example 4 | Comparative Example 5 | Comparative Example 6 |
|---|---|---|---|---|---|---|
| Main agent | A'-1 | A'-2 | A'-3 | A'-4 | A'-5 | A'-6 |
| Curing agent | B-2 | B-2 | B-2 | B-2 | B-3 | B-4 |
| NCO/OH (mole ratio) | 1.00 | 1.00 | 1.00 | 1.00 | 1.03 | 1.02 |
| Crosslinking group density (mmol/g) | 0.95 | 0.95 | 0.95 | 0.97 | 0.95 | 0.65 |
| Mixed viscosity (mPa·s) | 1980 | 1800 | 1270 | 1650 | 2040 | 200 |
| Pot life (seconds) | 191 | 197 | 219 | 213 | 197 | 2880 |
| Hardness | 54 | 54 | 54 | 56 | 58 | 30 |
| Low molecular weight elution value | 0.038 | 0.044 | 0.059 | 0.060 | 0.054 | 0.18 |
| Whiteness | 48 | 18.6 | 6.0 | 6.3 | 6.8 | 5.9 |

### Reference Signs List

11: housing, 13: hollow fiber membrane, 15: first fluid inlet, 17: first fluid outlet, 19: membrane sealing material, 100: membrane module (hollow fiber membrane module).

## Claims

1. A polyisocyanate composition comprising a polyisocyanate (A), wherein
the polyisocyanate (A) contains:
a diphenylmethane diisocyanate (a1);
an isocyanate-terminated prepolymer (a2); and
a modified isocyanate (a3), wherein
the isocyanate-terminated prepolymer (a2) is a reaction product of a polyisocyanate (a2-1) and a polyol (a2-2), wherein
the polyisocyanate (a2-1) contains a diphenylmethane diisocyanate (a2-1-1) and a modified isocyanate (a2-1-2), wherein
the modified isocyanate (a2-1-2) is at least one selected from the group consisting of a carbodiimide-modified diphenylmethane diisocyanate and a uretonimine-modified diphenylmethane diisocyanate, and
the modified isocyanate (a3) is a modified product of a diphenylmethane diisocyanate, and
a content of the modified isocyanate (a2-1-2) in the polyisocyanate (a2-1) is 4.5% to 15% by mass.

2. The polyisocyanate composition according to claim 1, wherein the modified isocyanate (a3) contains at least one selected from the group consisting of a carbodiimide-modified diphenylmethane diisocyanate and a uretonimine-modified diphenylmethane diisocyanate.

3. The polyisocyanate composition according to claim 1, wherein a total content of a structural unit derived from the modified isocyanate (a2-1-2) and the modified isocyanate (a3) in the polyisocyanate (A) is 4.5% to 15% by mass.

4. The polyisocyanate composition according to claim 1, wherein a content percentage of a structural unit derived from 4,4'-diphenylmethane diisocyanate in structural units derived from diphenylmethane diisocyanates in the isocyanate-terminated prepolymer (a2) is 50 to 80%.

5. The polyisocyanate composition according to claim 1, wherein a total content percentage of a structural unit derived from 2,2'-diphenylmethane diisocyanate and a structural unit derived from 2,4'-diphenylmethane diisocyanate in structural units derived from diphenylmethane diisocyanates in the isocyanate-terminated prepolymer (a2) is 20 to 50%.

6. A polyurethane resin forming composition comprising:
the polyisocyanate composition according to any one of claims 1 to 5; and
a polyol (B).

7. The polyurethane resin forming composition according to claim 6, wherein
the polyol (B) contains:
at least one polyol (b1) selected from the group consisting of castor oil, partially dehydrated castor oil, and a castor oil-modified polyol; and
an amine-based compound (b2) having two or more hydroxy groups.

8. The polyurethane resin forming composition according to claim 7, wherein a content of the amine-based compound (b2) in the polyol (B) is 30% by mass or less.

9. The polyurethane resin forming composition according to claim 6, which has a crosslinking group density of 0.9 mmol/g or more.

10. The polyurethane resin forming composition according to claim 6, which is for a membrane sealing material.

11. A membrane sealing material comprising a cured product of the polyurethane resin forming composition according to claim 10.

12. A membrane module comprising:
a body portion;
a membrane; and
a membrane sealing material that seals a gap between the body portion and the membrane, wherein
the membrane sealing material is the membrane sealing material according to claim 11.

13. The membrane module according to claim 12, wherein
the membrane includes a plurality of hollow fiber membranes, and
the membrane sealing material seals a gap between the body portion and at least a part of the hollow fiber membranes and at least a part of a gap between the hollow fiber membranes.
